# EUROPEAN PATENT APPLICATION

(11) **EP 1 280 042 A2**
(43) Date of publication of application: **29.01.2003**
(21) Application number: 02255245.9
(22) Date of filing: 26.07.2002
(51) Int. Cl.: G06F 1/00

(54) **Privacy of data on a computer platform**

(30) Priority: 27.07.2001 GB 0118455
(71) Applicant: Hewlett-Packard Company, Palo Alto, CA 94304 (US)
(72) Inventor: Proudler, Graeme John, Stoke Gifford, Bristol BS34 8XQ (GB)
(74) Representative: Lawrence, Richard Anthony

(57) **Abstract**

A computer platform has a trust mechanism adapted to assure third parties interacting with the computer platform that the computer platform operates according to an indicated specification and a trusted execution area for execution of operations upon data. The trust mechanism guarantees the trusted status of the trusted execution area. In respect of the trusted execution area, privacy of third party data, or of audit of processes carried out on third party data, or of both, can be assured by the trust mechanism. This can in one arrangement be achieved by use of an audit data portal to provide controlled access to audit data.

## Description

### BACKGROUND OF THE INVENTION

### Field of the Invention

This invention relates to a method and apparatus that allow access to data on a computer platform and audit of processes acting on data on a computer platform to be controlled. It is particularly relevant to control by the owner of the data.

### Description of Related Art

A previous patent application in the name of the present applicant, Hewlett-Packard Company, US Patent Application No. 09/920554, filed on August 1, 2001 and entitled "Performance of a Service on a Computing Platform", (published as US02-0023212) and which is incorporated herein by reference, describes operations on a computing platform that has trusted compartments. That patent application is itself based on upon the applicant's WO 00/48063, entitled "Trusted Computing Platform" which discloses a trusted computing platform method and apparatus, which application is also incorporated herein by reference. The computer platform in the former application contains potentially several trusted compartments, which can operate at different levels of trust. Trusted compartments have the properties of conventional software compartments, referred to in the former application, in that they isolate the process inside the compartment from processes in other compartments, and control the access of the processes to platform resources. Trusted compartments have additional properties, in that they are able to record and provide proof of the execution of a process. They also provide privacy controls for data by checking that data is being used only for permitted purposes. The walls of some compartments are constructed from dedicated hardware, while the walls of other compartments are built using software that executes on the main computer platform processor.

The trusted computing platform (TCP) application referred to above discloses hardware which allows an integrity metric of a computing platform including a trusted platform module (TPM) or trusted device (TD) to be returned to a requestor at the time that a service requested by the requestor was carried out. As well as the integrity metric, evidence is provided that the service was carried out in accordance with required levels of trust.

Owners of third party data - who may be requestors of services as indicated above, or may be providers of content - may require still greater levels of privacy. In particular, they may wish to minimise any risk that their valuable data may lose economic value by being exposed to others, or that the third party's privacy may be compromised (for example, by exposure of medical data to another party). These concerns could apply to the user of a trusted computing platform, or even to the administrator of a trusted computing platform. The privileges normally held by an administrator are such that their level of control over a platform is the maximum level available, and typically greater than that possessed by a user.

### BRIEF SUMMARY OF THE INVENTION

According to a first aspect of the invention there is provided a computer platform having: a trust mechanism adapted to assure third parties interacting with the computer platform that the computer platform operates according to an indicated specification; and a trusted execution area for execution of operations upon data, wherein a trusted status of the trusted execution area is assured by the trust mechanism, and having no uncontrolled communication paths with any other part of the computer platform; whereby third party data in a memory of the trusted execution area has access restrictions to parties other than the third party, and the trust mechanism is adapted to indicate to the third party an attempt to access the third party data which is inconsistent with the access restrictions.

According to a second aspect of the invention there is provided a computer platform having: a trust mechanism adapted to assure third parties interacting with the computer platform that the computer platform operates according to an indicated specification; a trusted execution area for execution of operations upon data, wherein a trusted status of the trusted execution area is assured by the trust mechanism, and having no uncontrolled communication paths with any other part of the computer platform; an trusted audit mechanism for obtaining an audit record of operations upon data in the trusted execution area and for controlling access to the audit record, wherein a trusted status of the trusted audit mechanism is assured by the trust mechanism.

According to a third aspect of the invention there is provided an audit data portal for a trusted computing platform adapted to assure third parties interacting with the computing platform that the computer platform operates according to an indicated specification is operable to contain information that is sufficient and/or required for the audit of a trusted process executing on the trusted computing platform whose reliable execution is assured by the trusted computing platform.

According to a fourth aspect of the invention there is provided an audit data portal for a trusted computing platform adapted to assure third parties interacting with the computing platform that the computer platform operates according to an indicated specification is operable to control access to information that is sufficient and/or required for the audit of a trusted process executing on the trusted computing platform whose reliable execution is assured by the trusted computing platform.

In respect of the third and fourth aspects of the invention, the audit data is thus controlled so that access can be granted by the portal to advantageously maintain levels of information privacy required by an owner of the information and/or an owner of the processes using the information. The audit portal may advantageously restrict access by an operator, owner or even administrator of the trusted computing platform to the information. The provision of a separate memory for audit data is also advantageous.

According to a fifth aspect of the invention there is provided a method of executing operations on third party data on a computing platform, the computer platform having a trust mechanism adapted to assure third parties interacting with the computer platform that the computer platform operates according to an indicated specification, the method comprising: providing the data, and third party access restrictions applying to the data, to a trusted execution area having no uncontrolled communication paths with any other part of the computer platform, wherein a trusted status of the trusted execution area is assured by the trust mechanism; performing operations on the data in the trusted execution area; and the trust mechanism indicating to the third party any attempt to access the third party data which is inconsistent with the access restrictions.

According to a sixth aspect of the invention there is provided a method of auditing of operations on third party data on a computing platform, the computer platform having a trust mechanism adapted to assure third parties interacting with the computer platform that the computer platform operates according to an indicated specification, the method comprising: providing the data to a trusted execution area having no uncontrolled communication paths with any other part of the computer platform, wherein a trusted status of the trusted execution area is assured by the trust mechanism; performing operations on the data in the trusted execution area; a trusted audit mechanism obtaining an audit record of operations upon data in the trusted execution area, wherein a trusted status of the trusted audit mechanism is assured by the trust mechanism; and the trusted audit mechanism providing controlled access to the audit record.

All of the features disclosed herein may be combined with any of the above aspects in any combination.

### BRIEF DESCRIPTION OF THE DRAWINGS

In order to illustrate how the invention may be brought in to effect, specific embodiments will now be described, by way of example, with reference to the accompanying drawings, in which:
Figure 1 is a schematic diagram of a Trusted Computing Platform including an audit data portal;
Figure 2 is a schematic diagram of a multivalued memory structure;
Figure 3 is a schematic diagram of audit data portal memory;
Figure 4 is a schematic diagram of audit data for one trusted process;
Figure 5 is a schematic diagram of a Trusted Computing Platform containing an audit data portal, an audit data memory, and audit viewer;
Figure 6 is a diagram that illustrates a computing platform containing a trusted device;
Figure 7 is a diagram which illustrates a motherboard including a trusted device arranged to communicate with a smart card via a smart card reader and with a group of modules;
Figure 8 is a diagram that illustrates the trusted device of Figure 7 in more detail;
Figure 9 is a flow diagram which illustrates the steps involved in acquiring an integrity metric of the computing platform of Figure 6;
Figure 10 is a flow diagram which illustrates the steps involved in establishing communications between a trusted computing platform and a remote platform including the trusted platform verifying its integrity;
Figure 11 is a diagram which illustrates schematically the logical architecture of a computing platform as shown in Figure 6 which employs a compartmented operating system; and
Figure 12 is a flow diagram illustrating the interactions between a service requestor and a computing platform as shown in Figure 11;

### DETAILED DESCRIPTION OF THE INVENTION

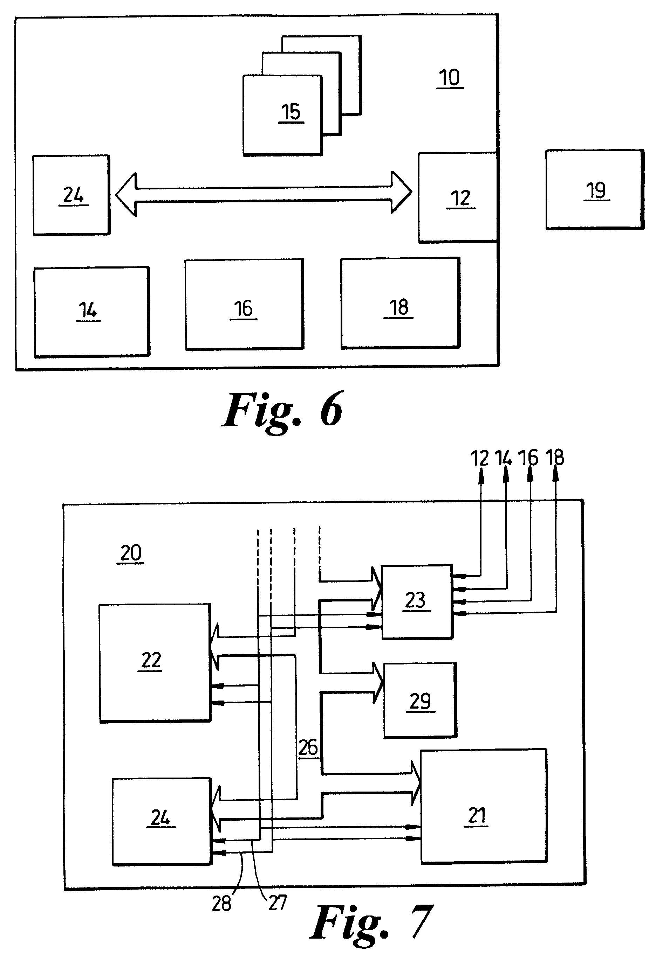

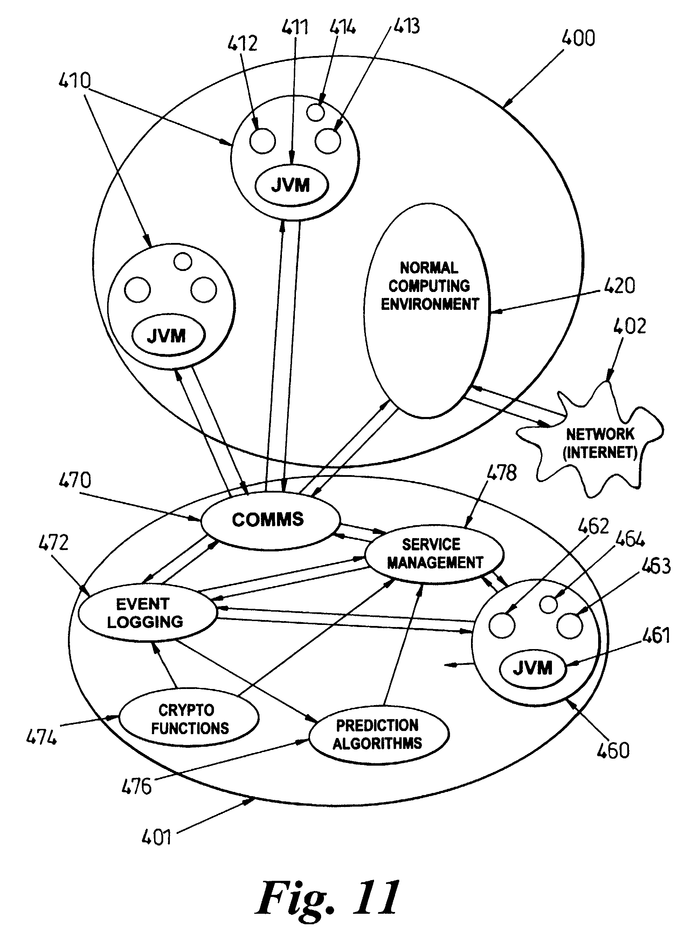

Before describing embodiments of the present invention reference is made to a computer platform that has trusted compartments of a type generally suitable for carrying out embodiments of the present invention. A trust mechanism employing trusted devices will first be described more generally with reference to Figures 6 to 10, and a computing platform employing such a trust mechanism together with a compartmented operating system will be described with reference to Figure 11.

A trusted computing platform will be described with relevance to Figures 6 to 10. This description of a trusted computing platform describes the essential elements of its construction, its role in providing integrity metrics indicating the state of the computing platform to a user of that platform, and communication of such metrics to a user. A "user", in this context, may be a remote user such as a remote computing entity (the requestor, in embodiments of the present invention, may fall into this category). A trusted computing platform is further described in the applicant's International Patent Application No. PCT/GB00/00528 entitled "Trusted Computing Platform" and filed on 15 February 2000, the contents of which are incorporated by reference herein. The skilled person will appreciate that the present invention does not rely for its operation on use of a trusted computing platform precisely as described below: use of such a trusted computing platform is one, rather than the only possible, manner of achieving functionality required in the present invention.

A trusted computing platform of the kind described here is a computing platform into which is incorporated a physical trusted device whose function is to bind the identity of the platform to reliably measured data that provides an integrity metric of the platform. The identity and the integrity metric are compared with expected values provided by a trusted party (TP) that is prepared to vouch for the trustworthiness of the platform. If there is a match, the implication is that at least part of the platform is operating correctly, depending on the scope of the integrity metric.

A user verifies the correct operation of the platform before exchanging other data with the platform. A user does this by requesting the trusted device to provide its identity and an integrity metric. (Optionally the trusted device will refuse to provide evidence of identity if it itself was unable to verify correct operation of the platform.) The user receives the proof of identity and the identity metric, and compares them against values which it believes to be true. Those proper values are provided by the TP or another entity that is trusted by the user. If data reported by the trusted device is the same as that provided by the TP, the user trusts the platform. This is because the user trusts the entity. The entity trusts the platform because it has previously validated the identity and determined the proper integrity metric of the platform.

Once a user has established trusted operation of the platform, he exchanges other data with the platform. For a local user, the exchange might be by interacting with some software application running on the platform. For a remote user, as will generally be the case in embodiments of the present invention, the exchange might involve a secure transaction. In either case, the data exchanged is 'signed' by the trusted device. The user can then have greater confidence that data is being exchanged with a platform whose behaviour can be trusted.

The trusted device uses cryptographic processes but does not necessarily provide an external interface to those cryptographic processes. Also, a most desirable implementation would be to make the trusted device tamperproof, to protect secrets by making them inaccessible to other platform functions and provide an environment that is substantially immune to unauthorised modification. Since tamper-proofing is impossible, the best approximation is a trusted device that is tamper-resistant, or tamper-detecting. The trusted device, therefore, preferably consists of one physical component that is tamper-resistant.

Techniques relevant to tamper-resistance are well known to those skilled in the art of security. These techniques include methods for resisting tampering (such as appropriate encapsulation of the trusted device), methods for detecting tampering (such as detection of out of specification voltages, X-rays, or loss of physical integrity in the trusted device casing), and methods for eliminating data when tampering is detected. Further discussion of appropriate techniques can be found at http://www.cl.cam.ac.uk/∼mgk25/tamper.html. It will be appreciated that, although tamper-proofing is a most desirable feature of the present invention, it does not enter into the normal operation of the invention and, as such, is beyond the scope of the present invention and will not be described in any detail herein.

The trusted device is preferably a physical one because it must be difficult to forge. It is most preferably tamper-resistant because it must be hard to counterfeit. It typically has an engine capable of using cryptographic processes because it is required to prove identity, both locally and at a distance, and it contains at least one method of measuring some integrity metric of the platform with which it is associated.

A trusted platform 10 is illustrated in the diagram in Figure 6. The platform 10 includes the standard features of a keyboard 14, mouse 16 and visual display unit (VDU) 18, which provide the physical 'user interface' of the platform. This embodiment of a trusted platform also contains a smart card reader 12 - a smart card reader is not an essential element of all trusted platforms, but is employed in various preferred embodiments described below. Along side the smart card reader 12, there is illustrated a smart card 19 to allow trusted user interaction with the trusted platform (use of a smart card for local trusted user interaction with a trusted platform is not of general relevance to function of the present invention, although embodiments of the present invention, may be used in this context, and is not described in detail herein - this aspect is further described in the applicant's International Patent Application No. PCT/GB00/00751, entitled "Smartcard User Interface for Trusted Computing Platform", and filed on 3 March 2000, the contents of which application are incorporated by reference herein). In the platform 10, there are a plurality of modules 15: these are other functional elements of the trusted platform of essentially any kind appropriate to that platform (the functional significance of such elements is not relevant to the present invention and will not be discussed further herein).

As illustrated in Figure 7, the motherboard 20 of the trusted computing platform 10 includes (among other standard components) a main processor 21, main memory 22, a trusted device 24, a data bus 26 and respective control lines 27 and lines 28, BIOS memory 29 containing the BIOS program for the platform 10 and an Input/Output (IO) device 23, which controls interaction between the components of the motherboard and the smart card reader 12, the keyboard 14, the mouse 16 and the VDU 18. The main memory 22 is typically random access memory (RAM). In operation, the platform 10 loads the operating system, for example Windows NT™, into RAM from hard disk (not shown). Additionally, in operation, the platform 10 loads the processes or applications that may be executed by the platform 10 into RAM from hard disk (not shown).

Typically, in a personal computer the BIOS program is located in a special reserved memory area, the upper 64K of the first megabyte do the system memory (addresses FØØØh to FFFFh), and the main processor is arranged to look at this memory location first, in accordance with an industry wide standard.

The significant difference between the platform and a conventional platform is that, after reset, the main processor is initially controlled by the trusted device, which then hands control over to the platform-specific BIOS program, which in turn initialises all input/output devices as normal. After the BIOS program has executed, control is handed over as normal by the BIOS program to an operating system program, such as Windows NT (TM), which is typically loaded into main memory 22 from a hard disk drive (not shown).

Clearly, this change from the normal procedure requires a modification to the implementation of the industry standard, whereby the main processor 21 is directed to address the trusted device 24 to receive its first instructions. This change may be made simply by hard-coding a different address into the main processor 21. Alternatively, the trusted device 24 may be assigned the standard BIOS program address, in which case there is no need to modify the main processor configuration.

It is highly desirable for the BIOS boot block to be contained within the trusted device 24. This prevents subversion of the obtaining of the integrity metric (which could otherwise occur if rogue software processes are present) and prevents rogue software processes creating a situation in which the BIOS (even if correct) fails to build the proper environment for the operating system.

Although, in the trusted computing platform embodiment to be described, the trusted device 24 is a single, discrete component, it is envisaged that the functions of the trusted device 24 may alternatively be split into multiple devices on the motherboard, or even integrated into one or more of the existing standard devices of the platform. For example, it is feasible to integrate one or more of the functions of the trusted device into the main processor itself, provided that the functions and their communications cannot be subverted. This, however, would probably require separate leads on the processor for sole use by the trusted functions. Additionally or alternatively, although in the present embodiment the trusted device is a hardware device that is adapted for integration into the motherboard 20, it is anticipated that a trusted device may be implemented as a 'removable' device, such as a dongle, which could be attached to a platform when required. Whether the trusted device is integrated or removable is a matter of design choice. However, where the trusted device is separable, a mechanism for providing a logical binding between the trusted device and the platform should be present.

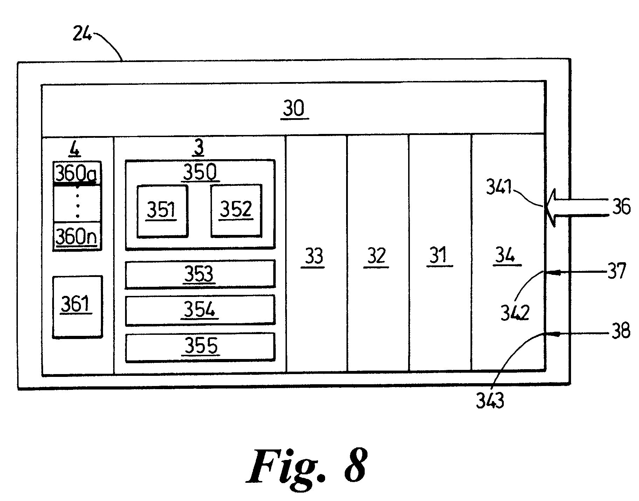

The trusted device 24 comprises a number of blocks, as illustrated in Figure 8. After system reset, the trusted device 24 performs a secure boot process to ensure that the operating system of the platform 10 (including the system clock and the display on the monitor) is running properly and in a secure manner. During the secure boot process, the trusted device 24 acquires an integrity metric of the computing platform 10. The trusted device 24 can also perform secure data transfer and, for example, authentication between it and a smart card via encryption/decryption and signature/verification. The trusted device 24 can also securely enforce various security control policies, such as locking of the user interface. In a particularly preferred arrangement, the display driver for the computing platform is located within the trusted device 24 with the result that a local user can trust the display of data provided by the trusted device 24 to the display - this is further described in the applicant's International Patent Application No. PCT/GB00/02005, entitled "System for Providing a Trustworthy User Interface" and filed on 25 May 2000, the contents of which are incorporated by reference herein.

Specifically, the trusted device comprises: a controller 30 programmed to control the overall operation of the trusted device 24, and interact with the other functions on the trusted device 24 and with the other devices on the motherboard 20; a measurement function 31 for acquiring the integrity metric from the platform 10; a cryptographic function 32 for signing, encrypting or decrypting specified data; an authentication function 33 for authenticating a smart card; and interface circuitry 34 having appropriate ports (36, 37 & 38) for connecting the trusted device 24 respectively to the data bus 26, control lines 27 and address lines 28 of the motherboard 20. Each of the blocks in the trusted device 24 has access (typically via the controller 30) to appropriate volatile memory areas 4 and/or non-volatile memory areas 3 of the trusted device 24. Additionally, the trusted device 24 is designed, in a known manner, to be tamper resistant.

For reasons of performance, the trusted device 24 may be implemented as an application specific integrated circuit (ASIC). However, for flexibility, the trusted device 24 is preferably an appropriately programmed microcontroller. Both ASICs and micro-controllers are well known in the art of microelectronics and will not be considered herein in any further detail.

One item of data stored in the non-volatile memory 3 of the trusted device 24 is a certificate 350. The certificate 350 contains at least a public key 351 of the trusted device 24 and an authenticated value 352 of the platform integrity metric measured by a trusted party (TP). The certificate 350 is signed by the TP using the TP's private key prior to it being stored in the trusted device 24. In later communications sessions, a user of the platform 10 can verify the integrity of the platform 10 by comparing the acquired integrity metric with the authentic integrity metric 352. If there is a match, the user can be confident that the platform 10 has not been subverted. Knowledge of the TP's generally-available public key enables simple verification of the certificate 350. The non-volatile memory 35 also contains an identity (ID) label 353. The ID label 353 is a conventional ID label, for example a serial number, that is unique within some context. The ID label 353 is generally used for indexing and labelling of data relevant to the trusted device 24, but is insufficient in itself to prove the identity of the platform 10 under trusted conditions.

The trusted device 24 is equipped with at least one method of reliably measuring or acquiring the integrity metric of the computing platform 10 with which it is associated. In the present embodiment, the integrity metric is acquired by the measurement function 31 by generating a digest of the BIOS instructions in the BIOS memory. Such an acquired integrity metric, if verified as described above, gives a potential user of the platform 10 a high level of confidence that the platform 10 has not been subverted at a hardware, or BIOS program, level. Other known processes, for example virus checkers, will typically be in place to check that the operating system and application program code has not been subverted.

The measurement function 31 has access to: non-volatile memory 3 for storing a hash program 354 and a private key 355 of the trusted device 24, and volatile memory 4 for storing acquired integrity metric in the form of a digest 361. In appropriate embodiments, the volatile memory 4 may also be used to store the public keys and associated ID labels 360a-360n of one or more authentic smart cards 19s that can be used to gain access to the platform 10.

In one preferred implementation, as well as the digest, the integrity metric includes a Boolean value, which is stored in volatile memory 4 by the measurement function 31, for reasons that will become apparent.

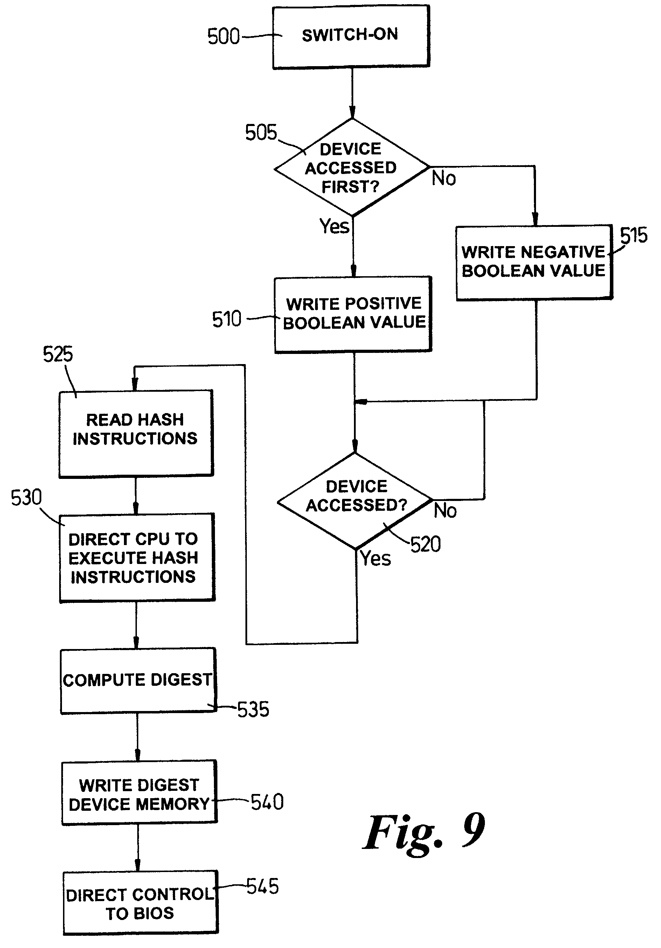

A preferred process for acquiring an integrity metric will now be described with reference to Figure 9.

In step 500, at switch-on, the measurement function 31 monitors the activity of the main processor 21 on the data, control and address lines (26, 27 & 28) to determine whether the trusted device 24 is the first memory accessed. Under conventional operation, a main processor would first be directed to the BIOS memory first in order to execute the BIOS program. However, in accordance with the present embodiment, the main processor 21 is directed to the trusted device 24, which acts as a memory. In step 505, if the trusted device 24 is the first memory accessed, in step 510, the measurement function 31 writes to volatile memory 3 a Boolean value which indicates that the trusted device 24 was the first memory accessed. Otherwise, in step 515, the measurement function writes a Boolean value which indicates that the trusted device 24 was not the first memory accessed.

In the event the trusted device 24 is not the first accessed, there is of course a chance that the trusted device 24 will not be accessed at all. This would be the case, for example, if the main processor 21 were manipulated to run the BIOS program first. Under these circumstances, the platform would operate, but would be unable to verify its integrity on demand, since the integrity metric would not be available. Further, if the trusted device 24 were accessed after the BIOS program had been accessed, the Boolean value would clearly indicate lack of integrity of the platform.

In step 520, when (or if) accessed as a memory by the main processor 21, the main processor 21 reads the stored native hash instructions 354 from the measurement function 31 in step 525. The hash instructions 354 are passed for processing by the main processor 21 over the data bus 26. In step 530, main processor 21 executes the hash instructions 354 and uses them, in step 535, to compute a digest of the BIOS memory 29, by reading the contents of the BIOS memory 29 and processing those contents according to the hash program. In step 540, the main processor 21 writes the computed digest 361 to the appropriate non-volatile memory location 4 in the trusted device 24. The measurement function 31, in step 545, then calls the BIOS program in the BIOS memory 29, and execution continues in a conventional manner.

Clearly, there are a number of different ways in which the integrity metric may be calculated, depending upon the scope of the trust required. The measurement of the BIOS program's integrity provides a fundamental check on the integrity of a platform's underlying processing environment. The integrity metric should be of such a form that it will enable reasoning about the validity of the boot process - the value of the integrity metric can be used to verify whether the platform booted using the correct BIOS. Optionally, individual functional blocks within the BIOS could have their own digest values, with an ensemble BIOS digest being a digest of these individual digests. This enables a policy to state which parts of BIOS operation are critical for an intended purpose, and which are irrelevant (in which case the individual digests must be stored in such a manner that validity of operation under the policy can be established).

Other integrity checks could involve establishing that various other devices, components or apparatus attached to the platform are present and in correct working order. In one example, the BIOS programs associated with a SCSI controller could be verified to ensure communications with peripheral equipment could be trusted. In another example, the integrity of other devices, for example memory devices or co-processors, on the platform could be verified by enacting fixed challenge/response interactions to ensure consistent results. Where the trusted device 24 is a separable component, some such form of interaction is desirable to provide an appropriate logical binding between the trusted device 14 and the platform. Also, although in the present embodiment the trusted device 24 utilises the data bus as its main means of communication with other parts of the platform, it would be feasible, although not so convenient, to provide alternative communications paths, such as hard-wired paths or optical paths. Further, although in the present embodiment the trusted device 24 instructs the main processor 21 to calculate the integrity metric in other embodiments, the trusted device itself is arranged to measure one or more integrity metrics.

Preferably, the BIOS boot process includes mechanisms to verify the integrity of the boot process itself. Such mechanisms are already known from, for example, Intel's draft "Wired for Management baseline specification v 2.0 - BOOT Integrity Service", and involve calculating digests of software or firmware before loading that software or firmware. Such a computed digest is compared with a value stored in a certificate provided by a trusted entity, whose public key is known to the BIOS. The software/firmware is then loaded only if the computed value matches the expected value from the certificate, and the certificate has been proven valid by use of the trusted entity's public key. Otherwise, an appropriate exception handling routine is invoked.

Optionally, after receiving the computed BIOS digest, the trusted device 24 may inspect the proper value of the BIOS digest in the certificate and not pass control to the BIOS if the computed digest does not match the proper value. Additionally, or alternatively, the trusted device 24 may inspect the Boolean value and not pass control back to the BIOS if the trusted device 24 was not the first memory accessed. In either of these cases, an appropriate exception handling routine may be invoked.

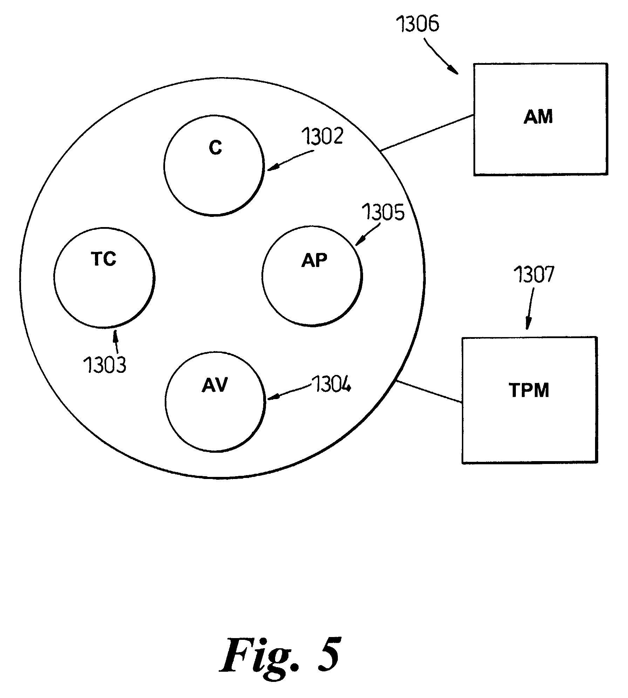

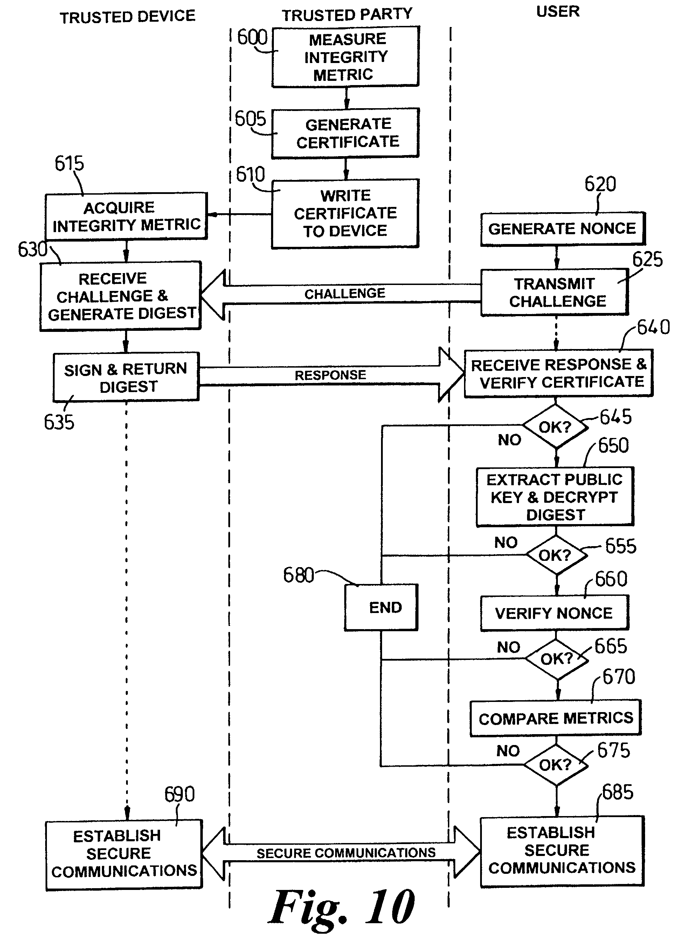

Figure 10 illustrates the flow of actions by a TP, the trusted device 24 incorporated into a platform, and a user (of a remote platform) who wants to verify the integrity of the trusted platform. It will be appreciated that substantially the same steps as are depicted in Figure 5 are involved when the user is a local user. In either case, the user would typically rely on some form of software application to enact the verification. It would be possible to run the software application on the remote platform or the trusted platform. However, there is a chance that, even on the remote platform, the software application could be subverted in some way. Therefore, it is anticipated that, for a high level of integrity, the software application would reside on a smart card of the user, who would insert the smart card into an appropriate reader for the purposes of verification.

At the first instance, a TP, which vouches for trusted platforms, will inspect the type of the platform to decide whether to vouch for it or not. This will be a matter of policy. If all is well, in step 600, the TP measures the value of integrity metric of the platform. Then, the TP generates a certificate, in step 605, for the platform. The certificate is generated by the TP by appending the trusted device's public key, and optionally its ID label, to the measured integrity metric, and signing the string with the TP's private key.

The trusted device 24 can subsequently prove its identity by using its private key to process some input data received from the user and produce output data, such that the input/output pair is statistically impossible to produce without knowledge of the private key. Hence, knowledge of the private key forms the basis of identity in this case. Clearly, it would be feasible to use symmetric encryption to form the basis of identity. However, the disadvantage of using symmetric encryption is that the user would need to share his secret with the trusted device. Further, as a result of the need to share the secret with the user, while symmetric encryption would in principle be sufficient to prove identity to the user, it would insufficient to prove identity to a third party, who could not be entirely sure the verification originated from the trusted device or the user.

In step 610, the trusted device 24 is initialised by writing the certificate 350 into the appropriate non-volatile memory locations 3 of the trusted device 24. This is done, preferably, by secure communication with the trusted device 24 after it is installed in the motherboard 20. The method of writing the certificate to the trusted device 24 is analogous to the method used to initialise smart cards by writing private keys thereto. The secure communications is supported by a 'master key', known only to the TP, that is written to the trusted device (or smart card) during manufacture, and used to enable the writing of data to the trusted device 24; writing of data to the trusted device 24 without knowledge of the master key is not possible.

At some later point during operation of the platform, for example when it is switched on or reset, in step 615, the trusted device 24 acquires and stores the integrity metric 361 of the platform.

When a user wishes to communicate with the platform, in step 620, he creates a nonce, such as a random number, and, in step 625, challenges the trusted device 24 (the operating system of the platform, or an appropriate software application, is arranged to recognise the challenge and pass it to the trusted device 24, typically via a BIOS-type call, in an appropriate fashion). The nonce is used to protect the user from deception caused by replay of old but genuine signatures (called a 'replay attack') by untrustworthy platforms. The process of providing a nonce and verifying the response is an example of the well-known 'challenge/response' process.

In step 630, the trusted device 24 receives the challenge and creates an appropriate response. This may be a digest of the measured integrity metric and the nonce, and optionally its ID label. Then, in step 635, the trusted device 24 signs the digest, using its private key, and returns the signed digest, accompanied by the certificate 350, to the user.

In step 640, the user receives the challenge response and verifies the certificate using the well known public key of the TP. The user then, in step 650, extracts the trusted device's 24 public key from the certificate and uses it to decrypt the signed digest from the challenge response. Then, in step 660, the user verifies the nonce inside the challenge response. Next, in step 670, the user compares the computed integrity metric, which it extracts from the challenge response, with the proper platform integrity metric, which it extracts from the certificate. If any of the foregoing verification steps fails, in steps 645, 655, 665 or 675, the whole process ends in step 680 with no further communications taking place.

Assuming all is well, in steps 685 and 690, the user and the trusted platform use other protocols to set up secure communications for other data, where the data from the platform is preferably signed by the trusted device 24.

Further refinements of this verification process are possible. It is desirable that the challenger becomes aware, through the challenge, both of the value of the platform integrity metric and also of the method by which it was obtained. Both these pieces of information are desirable to allow the challenger to make a proper decision about the integrity of the platform. The challenger also has many different options available - it may accept that the integrity metric is recognised as valid in the trusted device 24, or may alternatively only accept that the platform has the relevant level of integrity if the value of the integrity metric is equal to a value held by the challenger (or may hold there to be different levels of trust in these two cases).

The description above indicates the general structure, purpose, and interaction behaviour of a trusted computing platform. With reference to Figure 11, the logical architecture of a trusted computing platform using a compartmented operating system will be described.

The logical architecture shown in Figure 11 shows a logical division between the normal computer platform space 400 and the trusted component space 401 matching the physical distinction between the trusted component 24 and the remainder of the computer platform. The logical space (user space) 400 comprises everything physically present on motherboard 20 of computer platform 10 other than trusted component 24: logical space (trusted space) 401 comprises everything present within the trusted component 24.

User space 400 comprises all normal logical elements of a user platform, many of which are not shown here (as they are of no particular significance to the operation of the present invention) or are subsumed into normal computing environment 420, which is under the control of the main operating system of the trusted computing platform. The logical space representing normal computing environment 420 is taken here to include normal drivers, including those necessary to provide communication with external networks 402 such as the internet (in the examples shown this is the route taken to communicate with the requestor of a service from the trusted platform). Also subsumed here within the normal computing environment 420 logical space are the standard computational functions of the computing platform. The other components shown within user space 400 are compartments 410. These compartments will be described further below.

Trusted space 401 is supported by the processor and memory within trusted component 24. The trusted space 401 contains a communications component for interacting with compartments 410 and normal computing environment 420, together with components internal to the trusted space 401. It is desirable that there be a secure communications path between the normal computing environment 420 and the trusted space 401 (the applicant's copending International Patent Application No. PCT/GB00/00504, filed on 15 February 2000, the contents of which are incorporated by reference herein) - alternative embodiments may include a direct connection between trusted space 401 and external networks 402 which does not include the user space 400 - in the present arrangement, information that is only to be exchanged between the trusted space 401 and a remote user will pass encrypted through user space 400. The trusted space 401 also contains: an event logger 472 for collecting data obtained from different operations and providing this data in the form desired by a party who wishes to verify the integrity of these operations; cryptographic functions 474 which are required (as described below) in communication out of the trusted space 401 and in providing records within the trusted space 401 (for example, by the event logger 472); prediction algorithms 476 used to determine whether logged events conform to what is expected; and a service management function 478 which arranges the performance of services which are to be performed in a trusted manner (it would be possible in alternative embodiments for service management function to reside in the user space 400, but this would require a larger amount of encrypted communication and monitoring of the service management function 478 itself - residence of the service management function 478 within the trusted space 401 provides for a simpler solution). Also resident within the trusted space 401 is a trusted compartment 460.

Compartments 410, 460 will now be described further. A compartment 410, 460 is an environment containing a virtual computing engine 411, 461 wherein the actions or privileges of processes running on these virtual computing engines are restricted. Processes to be performed on the computing engine within a compartment will be performed with a high level of isolation from interference and prying by outside influences. Such processes are also performed with a high level of restriction on interference or prying by the process on inappropriate data. These properties are the result of the degree of reliability, because of the restrictions placed on the compartment, even though there is not the same degree of protection from outside influence that is provided by working in the trusted space 401. A well known form of compartment is a Java sandbox, in which case the virtual computing engine 411, 461 is a Java Virtual Machine (JVM). Java Virtual Machines and the handling of security within Java are described at the Sun Microsystems Java web site (http://java.sun.com, particularly http://java.sun.com/security). To implement sandboxes, a Java platform relies on three major components: the class loader, the byte-code verifier, and the security manager. Each component plays a key role in maintaining the integrity of the system. Together, these components ensure that: only the correct classes are loaded; the classes are in the correct format; untrusted classes will not execute dangerous instructions; and untrusted classes are not allowed to access protected system resources. Each component is described further in, for example, the white paper entitled "Secure Computing with Java^{TM}: Now and the Future" or in the Java Development Kit 1.1.X (both obtainable from Sun Microsystems, for example at http://java.sun.com). An example of the use of Java Virtual Machines in a compartmental environment is provided by HP Praesidium VirtualVault (basic details of HP Praesidium VirtualVault are described at http://www.hp.com/security/products/virtualvault/papers/br ief_4.0/).

Each compartment thus contains a Java Virtual Machine 411,461 as a computational engine for carrying out a process element (to be assigned to the compartment by the service management process 478, as will be described further below). Also contained within each compartment 411,461 is a communications tool 412,462 allowing the compartment to communicate effectively with other system elements (and in particular with the trusted space 401 by means of communications tool 470), a monitoring process 413,463 for logging details of the process carried out on the JVM 411,461 and returning details to the event logger 472 in the trusted space 401, and memory 414,464 for holding data needed by the JVM 411,461 for operation as a compartment and for use by the process element allocated to the compartment. Note that the functions of the event logger 472 may be modified in respect of embodiments of the present invention, as will be discussed further below.

There are two types of compartment shown in Figure 11. Compartments 410 are provided in the user space 400, and are protected only through the inherent security of a compartment. Compartments 410 are thus relatively secure against attack or corruption. However, for process elements which are particularly critical or particularly private, it may be desirable to insulate the process element from the user space 400 entirely. This can be achieved by locating a "trusted" compartment 460 within the trusted space 401 - the functionality of compartment 460 is otherwise just the same as that of compartment 410. An alternative to locating a trusted compartment 460 physically within the trusted device 24 itself is to locate the trusted compartment 460 within a separate physical element physically protected from tampering in the same way that trusted device 24 is protected - in this case it may also be advantageous to provide a secure communications path between the trusted device 24 and the tamper resistant entity containing the secure compartment 460.

Trusted compartments 460 provide a higher level of trust than components 410 because the "operating system" and "compartment protections" inside trusted module 24 may be hardcoded into hardware or firmware, and access to data or processes outside the trusted space 401 governed by a hardware or firmware gatekeeper. This makes it extremely difficult for a process in a trusted compartment to subvert its controls, or be affected by undesirable processes.

The number of protected compartments 460 provided is a balance between, on the one hand, the amount of highly trusted processing capacity available, and on the other hand, platform cost and platform performance. The number of compartments 410 available is less likely to affect cost significantly, but is a balance between platform performance and the ability to gather evidence about executing processes.

Depending on the complexity of processes to be performed by the trusted computing platform, there may be any number of compartments 410 and trusted compartments 460 used in the system.

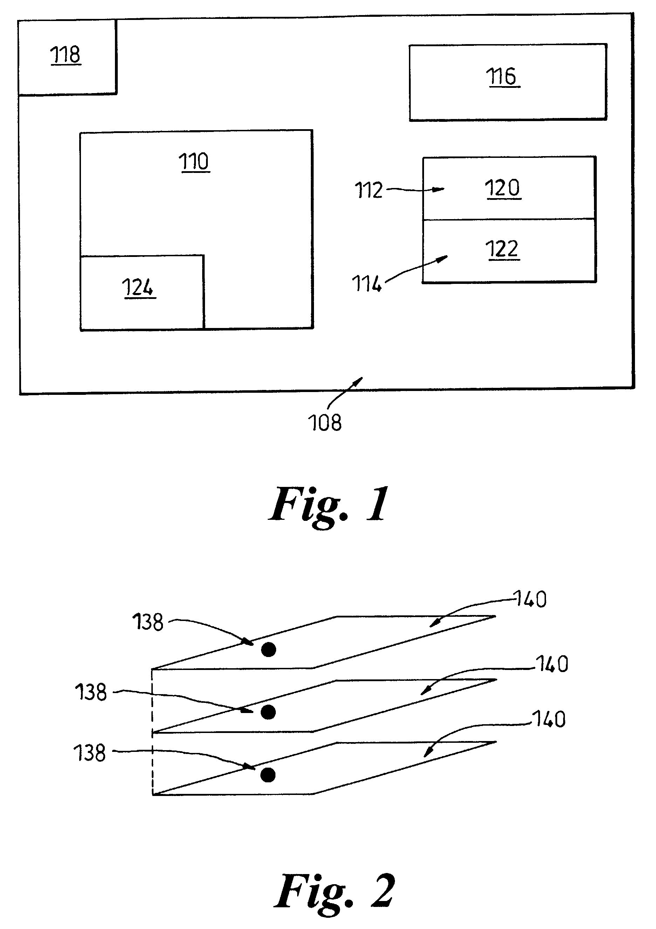

Such a platform may be used as a service platform to perform a service for a requestor, where the requestor requires the service to be performed in a specific manner. In particular, the requestor requires certain service elements within the overall service to be performed with a certain degree of reliability or security. Broadly, the service elements can be divided into three categories: service elements that it is essential be trusted; service elements that are required to be trustworthy, and service elements that need to operate properly for the service to function, but which do not require a special degree of trust. Services that it is essential must be trusted include, typically, those used to report on the state of the software environment in the trusted computing platform (this would be satisfied in principle by appropriate use of a trusted computing platform as shown in Figures 1 to 5) and also those that will provide evidence of the execution of the service. Service elements that may be required to be trustworthy are ones where one of the parties involved (most likely the requestor) wishes to treat the service element concerned of being of sufficient importance that some kind of guarantee of its integrity is required. An example could be a function that is known to be important to a particular community of interest (for example, in civil engineering it may be particularly important to ensure that certain types of calculation, for example in design of loadbearing components, are performed in an accurate and reliable manner). Other service elements have no specific level of trust associated (although some guarantee of reliability can be provided simply by use of a trusted computing platform to perform the service.

Integrity metrics can be used to determine whether there has been a failure of trust. Where a particular property or facility is to be regarded as trusted, the trusted component records an appropriate integrity metric. If the integrity metric indicates a failure of trust (for example, in different arrangements this may be indicated by an unknown computing environment, viewing of trusted data or an audit of processes acting on trusted data in an unauthorised manner. When more than one platform is involved, a trusted process may obtain a Trusted Computing Platform Alliance (TCPA) (see e.g. www.trustedpc.org) integrity response from the other platform(s) to determine the presence of an unacceptable platform state, and may refuse to communicate with that platform while it remains in that state. If one platform is involved, trusted data may be locked using the TCPA TPM_Seal command to acceptable platform states, so that the TPM in the platform refuses to release cryptographic keys necessary to recover such trusted data.

For processes running in a compartment (whether in the user space or the trusted space) the stages of performance of a process (here described as service process for clarity) will now be described. For this example, performance of a service process in compartment 410 in Figure 6 will be considered. The compartment contains a JVM as a virtual computing engine 411, a communications process 412 to allow exchange of data with (in particular) the service management process 478 and the event logging process 472, a monitoring process 413 for logging details of the process carried out on the JVM 411 and (if appropriate) returning details to the event logger 472, together with a memory 414 for holding data needed by the JVM 411. The service process is provided to the compartment through communications process 412 and necessary data placed in the memory 414. The service process can then be loaded on JVM 411 and the monitoring process 413 initiated according to the monitoring requirements provided with the service process.

Optionally, a compartment may be equipped for secure communications with the trusted component 24 (it may, for example, be provided with a cryptographic identity and appropriate cryptographic functions). If this is done, the process and any data sent with it by the service management process may be encrypted for decryption by the compartment.

The constrained nature of the compartment environment (in particular, features such as the class loader) prevent the loading of code other than that which is intended. This allows for secure loading of the service process onto the JVM 411. In a preferred modification, this approach can be extended to input data used by a service process. Preferably, data for use by service processes includes use permission information for that data (a default could be provided if there is no use permission attached - logically, this would be to allow unlimited use). Service processes, particularly those executing in a constrained environment such as a compartment, can then be adapted such that input data is only used if the service process qualifies under the relevant permissions. This may be achieved by typing input data to a service process (and logically also output data from the service) with labels, and also typing the operations performed by the service process upon data. A type label may indicate function ("use only in processes connected in searching for insurance policies and in processes connected with obtaining approval for a credit card application") or operational conditions ("use only in processes that execute before a certain time") or both. If the intended use of the data by a process is incompatible with the type label of that data, the data is not used by the process and an exception may be raised. Typing of input and output data, and of service process operations, in this way prevents data misuse. In embodiments of the present invention, as will be discussed further below, these ideas are extended to privacy of the data itself and its control by the owner of the data, and also to auditing of processes acting on such data and the privacy of such audit data.

When the compartment 410 returns input data to the process (this may be from memory 414 if the relevant data was provided by the service management process, from the main memory of the computing platform (or elsewhere) if it is well-known data or if a reference to data location has been passed to the service process, or may even be specifically requested from the trusted component 24) the monitoring process 413 generates, if required, a secure log of the input data (and, advantageously, any associated type tag). An effective way to do this is discussed further below.

Input data may be obtained from third parties, or may be present locally but have an identified "owner". In these cases, it may be desirable for the owner to be informed when the owner's data is used as input data in a service process - it may also be desirable for the process to contact the owner to obtain active consent to its use. In addition to input data, it is possible that a service process may call other processes or routines which could themselves have owners. Again, the compartment could inform these owners of the use of their processes or routines.

When the service process produces output data, it writes it to (generally) memory 414 and preferably includes with the output data a type of usage permitted on the data. A secure log of the output data may be generated in essentially the same way as for input data.

At the end of the execution of the service process on the compartment, there are two types of output. One is, as normal, the output results of the service process. In addition, there is (if requested by the service management process) a log produced by the monitoring process 413 which includes one or more of input data, output data and process execution data, in any form from a complete record of data and instructions to a calculated value of a sampling process, with different monitoring processes often used for different types of information. As will be discussed further below, in embodiments of the invention this use of this log is controlled to maintain the privacy of the owner of the data on which the service process has acted.

Embodiments of the present invention will now be further described. The skilled person will appreciate that the present invention does not rely for its operation on the use of trusted compartments exactly as set out in the computer platform of Figure 11; use of such trusted compartments is simply one example of how the same may be achieved. There will now be described how access to third party data, and to audit records for processes executing on third party data, may be controlled by use of an audit data portal as an interface to such data operating in accordance with rules provided by the third party. Such an arrangement can safeguard the third party against interference by a user of the trusted computer platform and even by its administrator - such third party data and audit data can even be made effectively invisible to either (in that, say, the administrator may be able to work out that data of this type exists, but will be unable to access it without revealing to the third party that there has been a failure of trust).

With reference to Figure 1, the logical architecture of a trusted computing platform (TCP) 108 including an audit data portal engine 110 is shown. The TCP 108 also includes a Trusted Platform Module (TPM) 116, a communication section 118 and runs applications 120 and 122.

The audit data portal engine 110 is concerned with the protection and disclosure of data (inputs and outputs, as well as ephemeral states) produced and/or used by processes executing in trusted compartments 112, 114 as described above. The credibility of such data for audit purposes obviously requires additional attributes that are stored with the usual value of the data, some of such attributes being described herein. In a general sense the usual value of a particular piece of data is simply one attribute of that data. Some combinations of attributes are better suited to maintaining the privacy of processes, and a partitioning of attributes to support privacy is disclosed herein.

The audit data portal engine 110 is implemented to allow the protection and disclosure of particular attributes by means of a portal to conventional memory 124. Of course, the audit data portal engine 110 may be integrated with conventional memory 124 to provide enhanced conventional memory. The enhancements may be achieved, as described in more detail below, by software methods using existing computing engines and existing memory, provided the platform has sufficient protection.

Preferably, the enhancements are implemented using hardware acceleration 110 that augments existing memory 124, or using specialised memory that includes hardware acceleration (the combination of 110 and 124). This augmented or enhanced memory supports auditing of the execution and results of the trusted platform 108, while maintaining protection and privacy for data and processes carried out on that data. The engine that controls and maintains and protects audit data is called an audit data portal 110, since it is the only means of access to audit data. The data is sufficient to audit a trusted process, the format of the data is optimised to protect the privacy of the data, and the access to the data via the portal serves to protect the data.

The audit data portal engine 110 provides access to data involved in audit, where different attributes of data have associations derived and/or maintained by that portal. Very significantly, the audit data portal 110 controls, partitions and/or bundles the audit data according to a contract or policy (as will be discussed further below), in order to communicate just enough data for the intended purpose to maximise the privacy of the ensemble of data. Also, the audit data portal engine 110 enables the communication of permissions and data to enable execution of a process using or generating that audit data while restricting the inspection of data associated with that process. Furthermore, the audit data portal engine allows the automatic selection of inspection points in a process using that audit data, according to a policy or contract dependent upon the supplier of the audit data and/or the presence of exceptions generated by that process. Still further, the audit data portal engine allows the provision of synchronisation information that identifies possible inspection points in a process using that audit data.

The audit data portal may require permission or permissions to release or supply audit data. The audit data portal may derive sufficient permissions from a policy and/or a contract to be able to independently release audit data to one or more processes and/or to one or more audit viewers. Otherwise, the audit data portal may be required by the policy and/or the contract to contact an owner of the data and/or an owner of the process and/or an owner of the platform and/or another party before releasing audit data to a process requesting access to the audit data portal and/or a viewer. Such contact may be required to obtain explicit permission or merely to report before releasing audit data. Such contact preferably uses cryptographic means to ensure the validity and integrity of the contact.

An audit memory structure designed to implement the audit data memory 124 described herein contains the attributes of a single piece of data, including its usual value. It is, as shown in Figure 2, possible to construct the audit memory structure logically using ordinary memory locations (as in ordinary computing platforms). The memory structure could be logically built as a layered structure at a single address 138, each layer 140 containing a different attribute of the data at that address 138, with potentially parallel processes concurrently accessing individual layers 140 at that single address 138. Parallel processing is most practical when audited memory uses hardware acceleration, because such hardware could permit simultaneous access to individual attributes. Each attribute is potentially dependent on other attributes. Many attributes depend on the executing process that is accessing the data described by that attribute.

To obtain audit data, it is necessary to log the execution of processes. General discussion of the recording of execution processes on a compartmented trusted platform will now be described with reference to Figure 11.

For a process generally, there are three types of data relevant to execution of processes: these are input data, output data and execution data. For satisfactory audit, the audit data should provide a sufficient record of the execution of the process to show that it took place successfully and correctly without subversion. To achieve this, it will generally be the case that some measure of reconstruction of the process itself and the data involved in that process will be achievable from the audit data. It can therefore be expected that audit data will be of comparable sensitivity to input data and output data itself.

For input data in a compartment 410, the monitoring process 413 generates, if required, a secure log of the input data (and, advantageously, any associated type tag). An effective way to do this is to store all this logged data in a linked-list, preferably by appending the data to a temporary sequence inside the compartment - this will be discussed further below. This data can be added to a log describing the process. The monitoring process adopted can be essentially similar to the process used by the trusted component 24 to monitor the integrity of the trusted computing platform.

Similarly, the monitoring process 413 can monitor execution of the service process, most logically by noting the value of the instructions and the order in which they execute. Use of sampling, as described above, may be particularly useful in this aspect of the monitoring process to reduce the volume of evidence produced or the computational burden in obtaining it. A preferred solution is to use a hash algorithm or stream cipher initialised with a nonce to produce an irregular sample rate. As for input data, the resulting data (including the nonce, the log and the sequence value in the irregular sampling case) would eventually be provided for signature by the trusted component 24.

When the service process produces output data, it writes it to (generally) memory 414 and preferably includes with the output data a type of usage permitted on the data. A secure log of the output data may be generated in essentially the same way as for input data.

As suggested above, input, output and execution data could all be sampled by the logging process rather than simply recorded. Sampling intervals could be explicitly stated in a contract with the provider of the input data, or may be determined by a function provided or referred to in the contract, preferably with a secret initial value (perhaps provided under the contract). If such a function is used, it is desirable to use a function with a large amount of entropy, such as a cryptographic hash or cipher (most advantageously a stream cipher, as this produces output data at the highest rate). After initialization, the function produces a data stream. The data stream can then be inspected, and when a particular pattern or patterns appear in that output, the data is sampled and a digest computed (an exemplary process for logging a sequence of values efficiently is to: (1) concatenate the existing value of the sequence (function) with the new value to be appended to the sequence; (2) pass the data through a hash algorithm, such as SHA-1 (described in National Institute of Standards and Technology (NIST), *Announcement of Weakness in the Secure Hash Standard,* 1994) ; and (3) set the digest produced by the hash algorithm as the new value of the sequence). The smaller the length of the pattern, the more frequent the average sample rate. Evidence of a process can thus be gathered at a lower average rate than the baud rate of the data. The use of a function with high output entropy (such as a hash or cipher) with pattern matching on its output provides an irregular sampling rate that makes it difficult to predict when data will not be sampled. The use of a secret initialization value provides a convenient way of expressing an irregular sampling rate as a single value. For logging program instructions (where the speed of the process may be severely limited by the sampling and logging process) it may be desirable to use an ensemble of hash engines operating in a predetermined manner or sequence in order to handle a higher baud rate of program instructions.

The outputs of such logging are audit data which, in the present case, is provided to the audit data portal 110 which then controls access to the audit data. The audit data portal may also be used as a controlled way to access any trusted data, such as audit data, relating to a process executing in a trusted compartment and in respect of which a third party has made access requirements in respect of specific other, or all other, parties (including a user or an administrator of the trusted computing platform itself). The audit memory 124 therefore needs to be secure against intrusion.

Audit memory 124 preferably consists of data structures that are protected against interference and inspection, so that the only access to data is via a portal 110 that controls access to audit memory 124. Protection can be provided by physical means, such as barriers and physical isolation. Protection can also be provided by the use of standard cryptographic techniques to provide integrity and confidentiality. Such techniques are well understood and need not be described here. It follows however that the attributes of audit memory include a cryptographic key and associated algorithm identifier. These are required to support the cryptographic protection mechanisms. These "cryptographic key" attributes require special treatment, in order to maintain a sufficient level of protection for audit data. They may be separately created and/or maintained using the TCPA "protected storage" capabilities of the trusted platform module (TPM) 116 which provides a portal for simple confidential storage of data values - these will be discussed further below. Keys from TCP protected storage may be supplied to compartments on demand, after the presentation of authorisation. Such authorisation data may be presented just once, at the start of a session, or every time that an attribute is accessed. Different authorisation information may be associated with different attributes.

When the contents of audit memory are properly protected, the contents may be safely transferred to normal unprotected memory structures. This may occur during normal execution, for example when data is swapped to temporarily make space in a resource, or when a process has terminated, to provide long term storage of audit data.

In addition to, or instead of, the form of logging evidence discussed above, the attributes of an entry in audit memory may include at least some of the following:
the value of the variable;
the name on the variable;
the type of the variable;
these three values being relevant to the variable itself, whereas the following values are relevant to the audit of that variable:
the operation on the variable;
the time of the operation on the variable;
the caller(s) that had read/write/modify access to the variable;
the conditions that were satisfied in order to gain access to the variable;
the security rating of a compartment where access occurred;
a signature or signatures by a compartment over at least some of the fields;
the key(s) used by a compartment to perform the signature(s);
a signature or signatures by a TPM over at least some of the fields;
the key(s) used by the TPM to perform the signature(s);
the key(s) used by a compartment to provide confidentiality for some or all fields.
the key(s) used by a TPM to provide confidentiality for some or all fields.

A TPM or trusted compartment may be provided with new capabilities to act as the audit data portal 10 for audit memory 24. For example, such a portal could automatically store ciphered attributes, recover plaintext attributes using the "key" attributes, and supply plaintext attributes to its host compartment and supply ciphertext attributes to other compartments. In its host compartment, the portal 10 presents a normal memory interface for the storage "value" of data, and automatically obtains/derives/stores other attributes in association with the "value" attribute. Most attributes such as "type", "time", "security attribute" are part of the execution information being gathered by the executing compartment 12, 14, for example, and would be automatically gathered and stored by the portal 10 when a "value" attribute is stored.

In the normal scope of activities on a computing platform, it may be necessary for a party to inspect the execution of a trusted process. It may also be necessary to execute or access records of an entire process in order to initialise the conditions of interest to a party, but it is generally undesirable for that party to have access to the entire process and to inspect all data - this may apply even if that party is the user or administrator of the trusted computing platform. Consequently, the data in audit memory 124 is preferably partitioned into sets in order to provide privacy for the data. A set simplifies access to the attributes described by that set. The sets may be organised according to a policy or contract associated with the data or process. One set may provide access to all attributes of all data in some time period, while another set may provide access to selected attributes of one data parameter for the entire process for example. The portal 110 would store and verify the authorisation information needed to access attributes and sets. Preferably, the portal generates that authorisation information. Each set is secured as a set by cryptographic means, which means are well known in the art and need not be described.

The partitioning into sets provides privacy whilst enabling the tracing of programs for reasons of efficiency and/or incorrect execution, or the review of an archived process. Partitioning requires different access controls and/or different cryptographic keys for different attributes of the same data and for a given attribute at different times and for a given attribute during the occurrence of given events, for example. If this is done, then an audit viewer can be given the access authorisation data or cryptographic keys for only the attributes during the period of execution that must be revealed to the viewer. It may be sufficient to display just certain attributes and not others. It may be sufficient to display just the caller-to-data and the time-of-access to data, but not the value of the data itself, for example.

As indicated above, the partitioning of the audit data into sets advantageously provides privacy whilst enabling the tracing of programs. This is useful for optimisation of computing resources and for investigation of programs that are executing wrongly, for example, while maintaining privacy of both the program and the data upon which the program operates.

The sets may be organised according to a policy or contract with a party associated with the data or a process requiring auditing. A first set may provide access to all audit data for a specified time period, for example. A second set may provide access to a subset of the audit data for the duration of a given process, for example. A third set may provide access to a subset of the audit data in the presence of certain events, for example.

The audit portal may also control access to data that may never be directly viewed. This occurs when auditing requires supporting data in order to interpret viewable data. Such hidden data describes the meaning and representation of the viewable data, for example.

It should be noted that the audit portal is thus effective not only to control access to audit data, but also to third party data itself. In accordance with the requirements of the third party, such data can thus be maintained private to the third party - even private from the administrator or the user of the trusted computing platform - or they could be allowed only restricted access (perhaps limited access to audit data and no access to the third party data itself). When kept private from the administrator, say, such data could be effectively invisible to the administrator (the administrator may be aware of the existence of data of this type, but have effectively no knowledge of its content).

The audit viewer preferably exists in a different entity (compartment and/or trusted compartment and/or TPM and/or platform) to that executing a process and/or executing the audit portal. In any event, the protections of the entity providing the audit viewer must be sufficient to prevent unauthorised viewing. Only the necessary attributes for the necessary time should be available to the viewer. The rest of the execution or processing should be in an environment to which the viewing party does not have access. If they need to communicate, the hidden environment and the viewer environment should communicate without revealing information to the viewing party. These environments can be implemented using the compartments described above.

Whereas this describes a preferred arrangement, the audit data portal may exist in the same or different entity, which entity may be a compartment and/or a trusted compartment and/or a TPM and/or a platform, as the process that uses and/or generates the audit data. The audit data portal may exist in the same or different entity, which entity may be a compartment and/or a trusted compartment and/or a TPM and/or a platform, as the computer memory.

Where an audit viewer is provided, this may be present in a compartment and/or a trusted compartment and/or a TPM. The audit viewer may exist in the same entity, which may be a compartment and/or a trusted compartment and/or a TPM and/or a platform, as the audit data portal and/or a process that uses and/or generates the audit data and/or the computer memory.

If the audit data portal executes in a different entity to that of a process processing the audit data, the communication of audit data between the audit data portal and the process is preferably protected by physical means, which may be physical barriers and/or logical means which may be cryptographic methods, that preferably render the audit data secure and confidential while in transit between the audit data portal and the process.

If the audit data portal executes in a different entity to that of the audit viewer, the communication of audit data between the audit data portal and the viewer is preferably protected by physical means, which may be physical barriers, and/or logical means, which may be cryptographic methods, that render the audit data secure and confidential while in transit between the audit data portal and the viewer.

If a process is executing it may execute on different processors using conventional remote procedure calls (RPC) with enhanced RPC stubs, as is known in the art. Most of the process could execute on one platform, and the audit viewer could execute on a second platform, for example. Alternatively, a process may execute in at least two compartments 12, 14 on the same platform, some of which compartments execute the hidden part of the process and are not therefore visible to the party, and others of which compartments execute the part that is to be examined by the party and are therefore visible to the party.

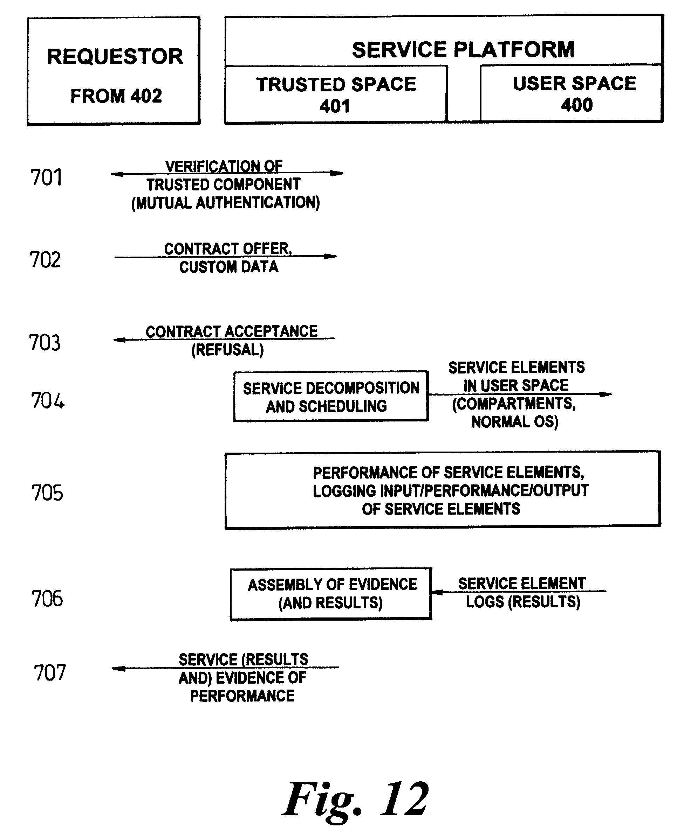

In the above, it has been indicated that the access control requirements for third party data and for audit records of processes carried out in third party data may be specified by a contract with the third party. Figure 12 illustrates the main elements of a process in by which a requestor arranges for a service to be performed on a service platform as shown in Figure 6 - the requestor may for example be a third party owning data, and the service platform may be a trusted computer platform with an audit data portal as described above.

The initial step is for the requestor to verify that the computing platform is a trusted computing platform by authenticating the trusted component 24 in step 701 - this process is essentially that shown in Figure 10. This process may be one of mutual authentication - the trusted computing platform may require that the requestor also be a trusted computing platform before performing certain kinds of service.

In step 702, the requestor sends the material necessary to define the service to the trusted computing platform. There are two elements to this material: one is the "contract", defining the service to be performed and any conditions on the performance of the service (such as access control requirements on data or audit records), and the other is any custom data required for the performance of the service (data which the requestor does not already know is available to the trusted computing platform, typically) - this may be the third party data for which privacy is required. This material is sent in encrypted form for decryption using the cryptographic functions of the trusted component 24, or using cryptographic functions available elsewhere in the computing platform, preferably in cooperation with facilities (such as key storage or session key communication) provided by the trusted component 24. Typically, the requestor secures the material under a session key, and then secures that session key under a key known only to trusted component 24. The requestor sends the protected session key and the protected material to the trusted computing platform. The trusted component 24 (specifically, its cryptographic functions 474) recovers the session key and verifies the source and integrity of the material by conventional security methods.

The contract must specify the service sufficiently that the trusted computing platform can interpret how to perform the service - what service elements must be performed, and how they are to be combined so that the results of the service can be returned to the requestor (or possibly forwarded to a third party). Moreover, the contract will specify any conditions placed by the requestor on how the service as a whole, or individual service elements, should be performed. Of particular relevance to embodiments of the present invention are requirements relating to privacy and access control. Such requirements can also relate to trust - for example, the requestor may require absolute trust to be essential for a first set of processes, high trust to be required for a second set of processes, and no specific requirement for a third set of processes: these requirements may be met by carrying out the first set of processes in trusted compartments 460, the second set of processes in compartments 410, and the third set of processes can be performed in the normal computing environment 420 under the control of the operating system of the computing platform. The requestor may also require evidence of the performance of the contract, both that the contract has been performed reliably but also under the conditions of trust required - typically, this requirement also needs absolute trust, and requires use of the trusted component 24, either in providing a trusted compartment or in providing evidence that normal compartments are executing in a safe environment. As has been described, evidence can be provided by logging inputs, execution and outputs of processes, particularly those to be carried out in a compartment or a trusted compartment. As has also been indicated above, evidence of this type can be provided as audit data to parties other than the third party in an appropriately controlled manner through the audit data portal.

More specifically, a contract will normally include the following: the processes that constitute at least a part of the service (it may be that other parts of the whole service offering are to be performed elsewhere, or that the whole service is covered by a "master contract" to which the present contract is ancillary); any processes that must execute on a trusted computing platform (typically, the requirement may be that all processes execute on a trusted computing platform, but not all within compartments or trusted compartments); the order of the processes in the service; and an unambiguous description of the processes (names or sources), possibly together with data to verify the integrity of such a description (such as a signed digest of a program for performing the process). The contract may also specify trust levels, or may specifically indicate that particular processes should be executed within a compartment or a trusted compartment. The contract may also determine how integrity of processes is determined: whether inputs and outputs are recorded or perhaps sampled (if so, how they are sampled), and may even determine scheduling of aspects of processes: how execution of processes is sampled; how execution within compartments (or trusted compartments) itself occurs; and how processes are swapped in and out of compartments (or trusted compartments). In embodiments of the present invention, the contract may specify access control requirements for any third party data, and also for any audit records from logging of processes carried out on such third party data. All this information should be provided in a machine-readable format for interpretation by the trusted computing platform (more specifically, the service management process 478) - a programming method such as ASN.1 is one possibility.

In step 703, the trusted computing platform either accepts or rejects the contract offer. An offer may be rejected if the trusted computing platform does not have the configuration required to perform the service according to the contract requirements (for example, if it does not have trusted compartments available, and these are explicitly or implicitly required by the contract offer), if the trusted computing platform does not trust the requestor, or if the service falls outside other parameters of acceptance programmed into the trusted computing platform. If an appropriate protocol exists, it may be possible to negotiate contract offers at this phase (perhaps by the trusted computing platform indicating which contract terms it cannot meet and offering alternatives, and the requestor deciding whether the alternatives are acceptable or offering new alternatives of its own - the process iterating until a contract is agreed or an impasse is reached).

If the contract offer is accepted, the service can be performed as the trusted computing platform received all necessary information with the contract offer (in an alternative, the custom data may be retained until the trusted computing platform accepts the contract offer, and is provided after the acceptance). In step 704, the service management process 478 in the trusted space 401 partitions the service into processes, and allocates the processes to trusted compartments 460, compartments 410 and the operating system 420 as appropriate. In addition, the service management process 478 assigns with the allocated processes any monitoring processes that are necessary to provide performance evidence. These may be specified in the contract itself, or the service management process 478 may determine a monitoring process necessary to provide a level of evidence required in the contract. In embodiments of the present invention, audit records will be provided through the audit data portal where data privacy is required.

In step 705, the service (or the processes comprising the service) are performed and the necessary evidence logged. In step 706, results of the service are provided where they are required (this may be to the requestor, or to third parties, or placed in a specific location - this depends on the nature of the service and its purpose) and the results of the evidence logging process provided to the audit data portal (if privacy is required) or to the event logger 472 for assembly into evidence for return to the requestor (preferably after signature by the trusted component 24). The service evidence (and, if the results of the service are to be private to the requestor, the service results) are then encrypted and returned to the requestor in step 707.

Examples of the use of such an audit data portal arrangement will now be discussed.

If an application fails when operating on the data belonging to a particular customer, that customer could send his data to the application vendor for execution on the trusted compartment platform 108. A skilled customer could manually indicate the point of failure and the data and attributes to be examined. This skilled customer instructs the target platform 108 to reveal to the vendor the stated attributes at the stated time and to conceal the rest. A less skilled customer could instruct the target platform 108 to automatically reveal certain attributes of certain data when the program raises an exception, and to conceal the rest of the attributes. In both cases the target platform 108 executes the revealed part in a compartment 112 to which a third party has access, and the rest is executed in a compartment 114 to which the third party does not have access. Alternatively, the target platform 108 executes the process in a compartment 114 to which the third party does not have access, and transfers execution to a viewer compartment 112 when the third party is granted access. Alternatively, the target platform 108 executes the process in a compartment 114 to which the third party does not have access, and grants inspection rights to the third party when access is granted.

In another scenario, a test program executes on the customer's trusted compartment platform 108. The customer states the attributes whose disclosure is permitted. The vendor selects a test program that will operate on the customer's platform 108 and report the results back to the vendor. The customer verifies the integrity of the test program using TCP integrity credentials, and states the conditions when the test program may act as a viewer.

It may also be advantageous to provide synchronisation data at the start of each set of attributes. Such synchronisation enables a recipient to start an inspection process of part of a process without knowledge of the method of interpretation of most of the process. The synchronisation method could be common across most, if not all, processes and could be an advantage when inspecting the execution record of a process. The sync pattern could be in or out of band. If in-band, it could be a pattern that is statistically very unlikely to occur. There are very many existing methods of synchronisation and the processes are not described further in this document, because examples will be known to the person skilled in the art.

For clarity, a description will now be given of a logical architecture that enables the auditing and viewing of trusted processes.

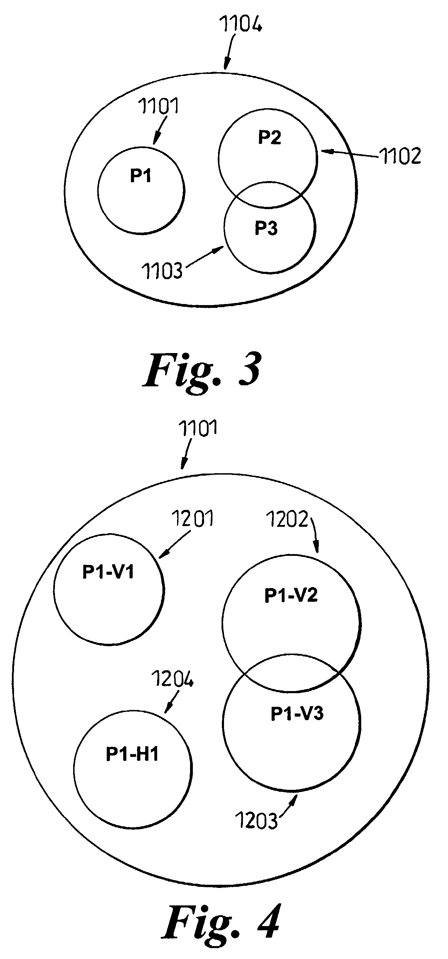

Figure 3 illustrates the contents 1104 of audit data memory 24. The audit data relevant to process 1 is stored as the set P1 1101. The audit data relevant to process 2 is stored as the set P2 1102. The audit data relevant to process 3 is stored as the set P3 1103. In this example, set P1 is disjoint to sets P2 and P3, but the data in set P2 overlaps with the data in set P3.

Figure 4 illustrates the audit data in set P1 1101. In this example, process 1 permits three views of its audit data P1 1101. The audit data that is visible in view 1 is stored as the set P1-V1 1201. The audit data that is visible in view 2 is stored as the set P1-V2 1202. The audit data that is visible in view 3 is stored as the set P1-V3 1203. Other data, necessary for interpretation of visible audit data, is hidden and stored as set P1-H1 1204.

Figure 5 illustrates a set of entities that are used to gather audit data and examine audit data. A software compartment 1302 executes some processes involved in an application. A software trusted-component 1303 executes other processes involved in an application. An audit viewer 1304 executes in a software compartment and enables viewing of the application while it executes and/or enables conventional auditing of the application after it has executed. An audit portal 1305 executes in a software trusted-compartment. An audit memory 1306 resides in normal memory. The compartments are provided by a compartment operating system 1301. A Trusted Platform Module 1307 monitors the platform that provides the compartment operating system 1301 and its compartments 1302-1305. The compartment operating system 1301 ensures that the compartments 1302-1305 have the necessary isolation from each other and from platform resources. The Trusted Platform Module 1307 measures the integrity metrics of the platform and the compartment operating system 1301. The audit portal 1305 uses cryptographic means to protect the audit data stored in audit memory 1306. The Trusted Platform Module 1307 uses TCPA "protected storage" functions to store the cryptographic keys used by the audit portal 1305 for protecting the audit data stored in audit memory 1306. The Trusted Platform Module 1307 uses TCPA "protected storage" functions to ensure that the cryptographic keys used by the audit portal 1305 are not released unless the integrity measurements of the platform and compartment operating system 1301 indicate that the compartment operating system 1301 and its components 1302-1305 are operating properly. Thus the TPM 1307 verifies that there are: no unauthorised programs executing on the platform that can snoop on the compartment operating system 1301; the compartment operating system 1301 will not snoop or otherwise interfere with the compartments 1302-1305; and the compartment operating system 1301 will isolate the compartments 1302-1305.

In this example, the system is executing process P1 and using and gathering audit data related to process P1. The process P1 is ready to execute in compartment 1302 and trusted compartment 1303. Audit memory 1306 contains the audit data 1104, but currently only ciphertext data P1-V1 1201 exists in set P1 1101. Compartment 1302 and trusted compartment 1303 have normal access to normal data (including programs). The audit portal 1305 obtains some cryptographic keys from the TPM 1307, which releases the keys because the integrity metrics indicate that the compartment operating system 1301 and the compartments 1302-1305 are operating properly, and are not themselves being snooped. The audit portal 1305 fetches ciphertext data P1-V1 1201 from audit memory 1306 and decrypts it using the keys fetched from the TPM 1307 to obtain plaintext data P1-V1. The audit portal supplies the data P1-V1 to compartments 1302 and 1303, which execute the application. Those results of the application which are required to be audited are sent from the compartments 1302 and 1303 to the audit portal 1305. The audit portal 1305 protects and partitions the results into sets P1-V2 1202 and P1-V3 1203 using cryptographic means, and stores the ciphertext sets P1-V2 1202 and P1-V3 1203 in audit memory 1306. The root crypto key for protecting sets P1-V2 1202 and the root crypto key for protecting P1-V3 1203 are sent to the TPM 1307. The TPM 1307 stores the root keys using TCPA "protected storage" functions to ensure that the keys are not released unless the integrity measurements of the platform and compartment operating system 1301 indicate that the compartment operating system 1301 and its components 1302-1305 are operating properly, and are not themselves being snooped.

The audit viewer 1304 is given confidentiality keys necessary to view audit data P1-V1 and P1-V2. These keys and audit data may be specifically released by the audit portal 1305 for express use of the audit viewer 1304, or may be keys used to communicate the sets between the compartments and the audit portal. The audit viewer 1304 may create a viewer of some sort that enables a human to interpret the sets P1-V1 1201 and P1-V2 1202. The audit viewer 1304 may send the sets P1-V1 1201 and P1-V2 1202 to another process for interpretation, whether by a human or other process.

The audit data portal described above provides significant advantages for the secure and private use of data involved in, or relating to the audit of, a process running on a trusted platform, because data is provided to parties other than the owner only in accordance with the wishes of the owner - for example, for specified purposes such as auditing only and only to the extent necessary for a given auditing reason - by using secure compartments in the manner described.

Whilst the invention has been described in relation to the applicant's TCP apparatus and the TCPA specification, it will be appreciated that the invention could be implemented in any trusted environment. In this respect a TCP as referred to in the claims is not limited to the applicant's trusted computing platform. In particular, embodiments in accordance with the spirit and scope of the present claims can be provided without use of a hardware trusted component as described herein.

## Claims

1. A computer platform having:
a trust mechanism adapted to assure third parties interacting with the computer platform that the computer platform operates according to an indicated specification; and
a trusted execution area for execution of operations upon data, wherein a trusted status of the trusted execution area is assured by the trust mechanism, and having no uncontrolled communication paths with any other part of the computer platform;
whereby third party data in a memory of the trusted execution area has access restrictions to parties other than the third party, and the trust mechanism is adapted to indicate to the third party an attempt to access the third party data which is inconsistent with the access restrictions.

2. A computer platform as claimed in claim 1, wherein such access restrictions can comprise no access to all or specified parties other than the third party.

3. A computer platform as claimed in claim 1 or claim 2, wherein the access restrictions apply to a user of the computer platform.

4. A computer platform as claimed in claim 1 or claim 2, wherein the access restrictions apply to an administrator of the computer platform.

5. A computer platform as claimed in any preceding claim, wherein the trust mechanism includes a hardware trusted component physically and logically resistant to unauthorised modification.

6. A computer platform as claimed in any preceding claim, wherein the trusted execution area comprises a compartment provided by an operating system of the computer platform.

7. A computer platform as claimed in claim 6, wherein a further compartment is provided as a portal for controlled access to third party data and results of operations on third party data in the trusted execution area.

8. A computer platform having:
a trust mechanism adapted to assure third parties interacting with the computer platform that the computer platform operates according to an indicated specification;
a trusted execution area for execution of operations upon data, wherein a trusted status of the trusted execution area is assured by the trust mechanism, and having no uncontrolled communication paths with any other part of the computer platform;
an trusted audit mechanism for obtaining an audit record of operations upon data in the trusted execution area and for controlling access to the audit record, wherein a trusted status of the trusted audit mechanism is assured by the trust mechanism.

9. A computer platform as claimed in claim 8, wherein access to the audit record by a user of the computer platform is controlled by the trusted audit mechanism.

10. A computer platform as claimed in claim 8, wherein access to the audit record by an administrator of the computer platform is controlled by the trusted audit mechanism.

11. A computer platform as claimed in any of claims 8 to 10, wherein the trust mechanism includes a hardware trusted component physically and logically resistant to unauthorised modification.

12. A computer platform as claimed in any of claims 8 to 11, wherein the trusted audit mechanism comprises a portal for controlled access to controlled data comprising third party data and results of operations on third party data in the trusted execution area.

13. A computer platform as claimed in any of claims 8 to 12, wherein the trusted execution area comprises a compartment provided by an operating system of the computer platform.

14. A computer platform as claimed in claim 13, wherein a further compartment is provided as the portal.

15. A computer platform as claimed in claim 11, wherein the trusted audit mechanism comprises the hardware trusted component as a portal for controlled access to third party data and results of operations on third party data in the trusted execution area.

16. A computer platform as claimed in any of claims 12 to 15, in which the controlled data is partitioned into sets, in order to provide privacy for the controlled data by offering the possibility of access to one set of the data, or part thereof, without access to another set.

17. A computer platform as claimed in any of claims 12 to 16, further comprising an audit viewer with which to view controlled data.

18. An audit data portal for a trusted computing platform adapted to assure third parties interacting with the computing platform that the computer platform operates according to an indicated specification is operable to contain information that is sufficient and/or required for the audit of a trusted process executing on the trusted computing platform whose reliable execution is assured by the trusted computing platform.

19. An audit data portal as claimed in claim 18, which controls access to said information.

20. An audit data portal for a trusted computing platform adapted to assure third parties interacting with the computing platform that the computer platform operates according to an indicated specification is operable to control access to information that is sufficient and/or required for the audit of a trusted process executing on the trusted computing platform whose reliable execution is assured by the trusted computing platform.

21. An audit data portal as claimed in claim 20, which comprises access control means operable to control access to a computer memory containing the said information.

22. An audit data portal as claimed in any of claims 18 to 21, which exists within a software compartment, such that software executing within that compartment provides the audit data portal.

23. An audit data portal as claimed in claim 22, which exists within a trusted compartment, such that software executing within the trusted compartment provides the audit data portal.

24. An audit data portal as claimed in claim 22, which exists within a trusted platform module which is a hardware trusted component physically and logically resistant to unauthorised modification, such that software and/or firmware and/or hardware of the trusted platform module provides the audit data portal.

25. An audit data portal as claimed in any of claims 18 to 24, which comprises access control means operable to control access to a computer memory containing the said information.

26. An audit data portal as claimed in any of claims 18 to 25, wherein the aforesaid information comprises audit data and in which the audit data is partitioned into sets, in order to provide privacy for the audit data by offering the possibility of access to one set of the data, or part thereof, without access to another set.

27. An audit data portal as claimed in any of claims 18 to 26, wherein the aforesaid information comprises audit data and further comprising an audit viewer with which to view audit data.

28. An audit data portal as claimed in any of claims 18 to 27, wherein the aforesaid information comprises audit data and in which, where the audit data portal executes in a different entity to that of a process processing the audit data, the communication of audit data between the audit data portal and the process is protected.

29. An audit data portal as claimed in any of claims 18 to 28, wherein the aforesaid information comprises audit data and in which, where the audit data portal executes in a different entity to that of the audit viewer, the communication of audit data between the audit data portal and the viewer is protected.

30. A method of executing operations on third party data on a computing platform, the computer platform having a trust mechanism adapted to assure third parties interacting with the computer platform that the computer platform operates according to an indicated specification, the method comprising:
providing the data, and third party access restrictions applying to the data, to a trusted execution area having no uncontrolled communication paths with any other part of the computer platform, wherein a trusted status of the trusted execution area is assured by the trust mechanism;
performing operations on the data in the trusted execution area; and
the trust mechanism indicating to the third party any attempt to access the third party data which is inconsistent with the access restrictions.

31. A method as claimed in claim 30, wherein the third party access restrictions also apply to results of operations on the data in the trusted execution area.

32. A method as claimed in claim 30 or claim 31, wherein such access restrictions comprise no visibility of the data to all or specified parties other than the third party.

33. A method as claimed in claim 32, wherein the all or specified parties include a user of the computer platform.

34. A method as claimed in claim 32, wherein the all or specified parties include an administrator of the computer platform.

35. A method of auditing of operations on third party data on a computing platform, the computer platform having a trust mechanism adapted to assure third parties interacting with the computer platform that the computer platform operates according to an indicated specification, the method comprising:
providing the data to a trusted execution area having no uncontrolled communication paths with any other part of the computer platform, wherein a trusted status of the trusted execution area is assured by the trust mechanism;
performing operations on the data in the trusted execution area;
a trusted audit mechanism obtaining an audit record of operations upon data in the trusted execution area, wherein a trusted status of the trusted audit mechanism is assured by the trust mechanism; and
the trusted audit mechanism providing controlled access to the audit record.

36. A method as claimed in claim 35, wherein access to the audit record by a user of the computer platform is controlled by the trusted audit mechanism.

37. A method as claimed in claim 35, wherein access to the audit record by an administrator of the computer platform is controlled by the trusted audit mechanism.
